# EUROPÄISCHE PATENTSCHRIFT

(11) **EP 1 356 919 B1**
(45) Veröffentlichungstag und Bekanntmachung des Hinweises auf die Patenterteilung: **19.10.2005**
(21) Anmeldenummer: 03005743.4
(22) Anmeldetag: 14.03.2003
(51) Int. Cl.: B29D 31/51

(54) **Verfahren zur Herstellung von Sohlen bei der maschinellen Schuhherstellung**
Method for the production of shoe soles
Procédé de fabrication de semelles de chaussures

(30) Priorität: 24.04.2002 DE 10218239
(43) Veröffentlichungstag der Anmeldung: 29.10.2003
(73) Patentinhaber: KLÖCKNER DESMA SCHUHMASCHINEN GmbH, 28832 Achim (DE)
(72) Erfinder: Freese, Klaus, 27299 Langwedel (DE); Koliwer, Wolfgang, 28832 Achim (DE)
(74) Vertreter: Röther, Peter

(56) Entgegenhaltungen:
- EP-A- 0 872 332
- WO-A-02/052971
- DE-A- 2 241 493
- DE-A- 3 600 682
- US-A- 6 007 748

## Beschreibung

Die Erfindung betrifft ein Verfahren zur Herstellung von Sohlen bei der maschinellen Schuhherstellung, wobei die Sohle aus mindestens einer Laufsohlenschicht und einer Zwischensohlenschicht aufgebaut ist, und die eine Schicht aus Gummi und die andere Schicht aus Polyurethan besteht, beide Schichten in demselben aus einem Bodenstempel, einem mindestens zweiteiligen Formenrahmen und einem Verdränger bzw. Leisten bestehenden Formwerkzeug hergestellt werden, wobei zunächst die Gummisohlenschicht geformt, auf diese Schicht das Polyurethan gegossen und zur Bildung der Zwischensohlenschicht ausreagieren gelassen wird.

Die bekannten, im Einsatz befindlichen Verfahren sind sämtlich mit Mängeln behaftet. Mit der Vulkanisation der Gummisohle bildet sich eine Aussenhaut, die sogenannte Vulkanisationshaut, welche eine Verbindung zum Polyurethan nahezu immer verhindert. Werden heute Gummi/Polyurethansohlen oder vergleichbare Artikel hergestellt, ist das Verfahren durch diverse Teilprozesse gekennzeichnet und sehr aufwendig. Der Fertigungsaufwand ist sehr umfangreich, teuer und unsicher, außerdem wird die Umwelt belastet. Auf Gummi-Vulkanisationsanlagen werden die separaten Gummisohlen hergestellt. Nach der Vulkanisation folgt häufig eine Behandlung der Gummioberfläche, um eine spätere Haftung zum Polyurethan zu erreichen. Hierbei werden die Gummisohlen eventuell halogenisiert, mit Haftvermittler und Klebstoff benetzt. Es ist eine entsprechende Logistik erforderlich. Auf einer separaten Polyurethan-Reaktionsgießanlage werden dann die vorgefertigten Gummisohlen eingelegt und mit Polyurethan überschäumt. Direkt vor dem Überschäumen wird der Klebstoff auf der Gummisohle eventuell thermisch aktiviert.

Die beiden Materialien werden nach grundsätzlich verschiedenen verfahrenstechnischen Methoden verarbeitet. Eine direkte Verbindung ist heute nicht gegeben, obwohl bereits in den achtziger Jahren Bestrebungen im Gange waren, eine Verbindung der Gummisohle mit der Polyurethan-Zwischensohle ohne Haftvermittler und Klebstoffe zu erreichen, wie es beispielsweise in der DE 36 00 682 A1 beschrieben worden ist. Die dort beschriebene Technik führte jedoch nicht zu den gewünschten Erfolgen.

Bekannt ist auch die mechanische Verbindung von Gummi und Polyurethan, indem eine textile Zwischenschicht beide Materialien verbindet. Das Aufbringen der Textilschicht auf den Verdränger oder auf die vorvulkanisierte Gummisohle stellt einen zusätzlichen Arbeitsgang dar. Da die Textilschicht seitlich zwischen Gummi und Polyurethan sichtbar ist, kann aus optischen und modischen Gründen das Textil häufig nicht eingesetzt werden. Da das Textil eine gewisse Wandstärke benötigt, ist es für dünne Sohlen oder sogenannte hohe Schalensohlen nicht einsetzbar.

Bekannt ist auch die chemische Verbindung aus Gummi und Polyurethan, indem Klebstoff aufgesprüht oder ähnlich aufgetragen wird, kurz bevor das Polyurethan-Material eingebracht wird. Da die Qualität der Verbindung unmittelbar von der Dicke der Klebstoffschicht, der Abbindezeit und von der Ablüftzeit abhängig ist, und außerdem zu einer starken Formenverschmutzung führt, findet auch dieses Verfahren in der Praxis kaum Anwendung.

Der Erfindung liegt daher die Aufgabe zugrunde, ein Verfahren der eingangs genannten Art, welches auf dem aus der De 36 00 682 A1 bekannten Stand der Technik aufbaut, so zu führen, dass ohne Klebstoffschicht eine innige Verbindung der beiden Materialien gewährleistet ist.

Die Erfindung löst diese Aufgabe gemäß dem kennzeichnenden Teil des Patentanspruchs 1 dadurch, dass zur Herstellung der Gummisohle zunächst der Bodenstempel und die Formenrahmenteile zu einer oben offen Formkavität zusammengefahren werden, in diese Formkavität die plastische Gummimasse mit einer Temperatur knapp unterhalb der Vulkanisationstemperatur eingefüllt wird, welche nach Aufsetzen eines Verdrängers im somit komplett geschlossenen Formwerkzeug in einer ersten Phase (t1) verpresst und vorvulkanisiert wird, danach in einer zweiten Phase (t2) bei geöffneten Formenrahmen eine Teilvulkanisation stattfindet, danach der Verdränger entfernt wird und die Oberfläche der Gummischicht eine Abkühlphase (t3) durchläuft, wobei in den Phasen (t2) und (t3) eine gesteuerte Untervulkanisation stattfindet, sodann der Verdränger durch einen Leisten bzw. durch einen weiteren Verdränger ersetzt wird, derart, dass zwischen Leisten/Verdränger und der freien Oberfläche der Gummisohle ein Formraum für die zu formende Zwischensohle verbleibt, in diesen Zwischenraum die Polyurethan-Masse eingegossen wird, nachdem auch der Formenrahmen geschlossen worden ist und die Polyurethan-Masse innerhalb der geschlossenen Form auf der Gummisohlenschicht unter Ableitung überflüssiger Reaktionswärme nach aussen ausreagiert, wobei durch die verbleibende Reaktionswärme die Nachvulkanisation (Phase t4) der Gummisohlenschicht erfolgt sowie die innige Verbindung zwischen Gummi- und Polyurethan-Schicht.

Es handelt sich somit um ein vierstufiges Vulkanisationsverfahren, bei dem in der ersten Phase die Vorvulkanisation in der geschlossenen Form stattfindet, wobei die Vulkanisationswärme in der Hauptsache durch die obere Verdrängerplatte übertragen wird.

Dabei wird das plastifizierte Gummimaterial nicht wie früher üblich unter sehr hohen Drücken in die geschlossene Formkavität eingespritzt, sondern von oben in die geöffnete Form mengengezielt eingegossen.

Die Verarbeitung der Materialien und die Fertigung der Artikel, insbesondere Schuhsohlen, erfolgt auf einer Rundtischanlage, im sogenannten ''One Step-Verfahren''. An der Anlage sind das Gummispritzgießaggregat und das Polyurethan-Reaktionsgießaggregat in einem definierten Abstand zueinander positioniert.

Da in diesem Prozess unterschiedliche Verfahrenstechniken angewendet werden, ist das Werkzeug bzw. die Schuhform auf ein Temperaturmix einzustellen.

Wie der Anspruch 3 vorschlägt, wird dabei der Bodenstempel auf einen Temperaturbereich zwischen 90°C und 150°C erwärmt, während der Verdränger auf einen Temperaturbereich zwischen 140°C und 220°C erwärmt wird. Der Formenrahmen wird dagegen in einem Temperaturbereich von 40°C bis 80°C temperiert.

Wie die Ansprüche 7 und 8 vorschlagen, wird eine Temperaturübertragung zwischen Bodenstempel und Rahmen durch Distanzstücke im Rahmen oder im Bodenstempel gemindert. Die unerwünschte Temperaturübertragung kann aber auch mittels abgesetzter Formflächen im Rahmen oder im Bodenstempel gemindert werden.

Nach Ablauf einer frei vorwählbaren Zeit (t1) öffnet der Formenrahmen, während die Gummisohle weiter zwischen dem Verdränger und dem Bodenstempel vulkanisiert. Dadurch wird eine kontrollierte Temperaturübertragung zwischen Verdränger und Bodenstempel zum Formenrahmen erzielt.

In einem weiteren Schritt wird dann der Verdränger entfernt und die Oberfläche der erzeugten Gummisohle kühlt ab, wobei sie in der Unterplatte des Formwerkzeugs liegen bleibt.

Im letzten Schritt, nachdem das Polyurethan-Material in die wieder geschlossene Form eingespritzt worden ist, läßt man das Polyurethan-Material auf der Gummioberfläche reagieren. Die Wärmeabgabe der exothermen Polyurethan-Reaktion und die Temperatur der Werkzeugunterplatte, z.B. des Bodenstempels, bewirkt dann das Ausvulkanisieren der Gummisohle, falls die Vulkanisation noch nicht abgeschlossen ist.

Die erste Phase (Vorvulkanisation) dient der Geometriebildung. Die zweite Phase (Teilvulkanisation) dient der Formstabilität. In Phase 2 und 3 wird der prozentuale Vulkanisationsgrad bestimmt, dabei wurde festgestellt, dass mit einer gesteuerten Untervulkanisation die Haftung zum Polyurethan positiv beeinflusst wird.

In der vierten Phase muss eine Überhitzung der Polyurethan-Schicht unterbunden werden. Hierfür werden die seitlichen Werkzeugteile, z.B. die Formenrahmen der Schuhform, mittels umlaufender Flüssigkeit temperiert. Ausserdem wird über die einstellbare Zeit t3 der Formenrahmen individuell geöffnet.

Wahlweise kann ein Öffnen der seitlichen Werkzeugteile, z.B. der Formenrahmen für die Polyurethan-Kavität der Zwischensohle, nach Erreichen einer vorgewählten Rahmentemperatur erfolgen.

Während bei den bekannten Verfahrensführungen im Stand der Technik (DE 36 00 682 A1) lediglich mittels Ausprobieren verschiedener Gummimischungen eine chemische Verbindung zwischen Gummi und Polyurethan erreicht werden sollte, bietet die erfindungsgemäße Verfahrensführung, bei der auf bestimmte einstellbare Vulkanisationsgrade abgestellt wird, eine reproduzierbare Lösung.

Als besonders geeignet für die Verfahrensführung hat sich dabei eine Kautschukmischung erwiesen, die eine gute Haftung zu vielen Standard-Polyurethan-Systemen auf Äther- sowie auf Esterbasis bietet, und die folgende Zusammensetzung aufweist:
Perbunan NT 3430
Perbunan NT 3465
Ultrasil VN 3
Titandioxid
Ruß N 772
Zinkoxid RS
Stearinsäure
Cumaronharz 75
Hycar VTBNX 1300 x 43
Schenectady SP 1045
Schwefel
Vulkacit Thimuram TMTD

Weitere Additive als Verarbeitungshilfsmittel bzw. Additive für besondere Artikeleigenschaften sind:
Mesamoll
Irostic 288/1
Chlorez 700

Als besonders vorteilhaft hat sich erwiesen, wenn das Dickenmaß (Wandstärke) des Gummiartikels, z.B. der Gummilaufsohle, konstant zwischen 1 und 2,5 mm liegt. Hierzu sieht der Anspruch 2 vor, dass die Verbindungsoberfläche der Gummisohlenschicht durch Einprägungen vergrößert wird, die den Konturen des Laufprofils der Gummisohle entsprechen, so dass die Gummisohlenschicht überall eine nahezu gleichmäßige Sohlenwandstärke erhält. Hierzu sind Konturveränderungen in der unteren Werkzeugplatte, wie z.B. die Stollengravur im Bodenstempel einer Gummilaufsohle, als Gegengravur in der oberen Werkzeugplatte, z.B. im Verdränger der Schuhform, eingebracht. Mit der gleichmäßigen Artikelstärke, wird eine gleichmäßige Temperaturführung und eine gleichmäßige Vulkanisation erreicht.

Vorzugsweise ist eine Sohlenstärke von ca. 1,5 mm zu wählen, um die Temperaturkontrolle positiv zu beeinflussen.

Obwohl die direkte Haftung zwischen den beiden, verschiedenen Sohlenschichten durch das erfindungsgemäße Verfahren ohne Hilfstoffe erzielt wird, können zur Verstärkung der Haftkraft natürlich die bekannten Hilfsstoffe eingesetzt werden.

Hierzu gehört z.B., dass bevor Polyurethan auf die vorvulkanissierte Gummifläche gespritzt oder gegossen wird, die Gummioberfläche termisch aktiviert wird, wozu beispielsweise ein Heizstrahler eingesetzt werden kann.

Es wurde weiter festgestellt, dass die Haftkraft an den Aussenbereichen der Schuhform stärker als im Kern der Grenzschicht wirkt. Diesen Effekt auszugleichen, kann eine dünne Textilschicht, kleiner als 1 mm, in bestimmten Bereichen eingelegt werden. Die Positionierung der Textilstücke kann direkt auf dem Verdränger erfolgen, bevor das Gummimaterial verpresst wird (Vorphase t1). Die Textilstücke können auch während der Abkühlphase der Gummilaufsohle positioniert werden, bevor Polyurethan-Material in das Formwerkzeug gefüllt wird (Vulkanisationsphase t3). Das Aufbringen von Textil- oder einem ähnlichen Material kann auch die Abkühlung der Gummioberfläche beschleunigen.

Die Erfindung wird anhand von Zeichnungen dargestellt und weiter erläutert.

Es zeigen:
- Fig. 1: Gummi/Polyurethan-Rundtischanlage
- Fig. 2: Aufbau und Bestandteile der Formwerkzeuge
- Fig. 2.1: Seiten- und Vorderansicht des Formwerkzeugs
- Fig. 3 a bis j: Verfahrensablauf
- Fig. 4 a, b: alternative Ausgestaltungen von Formenrahmen und Bodenstempel
- Fig. 5: Formwerkzeug mit Verdränger mit Gegengravur
- Figur 6 a bis b: Vulkanisationsphasen t1 bis t4

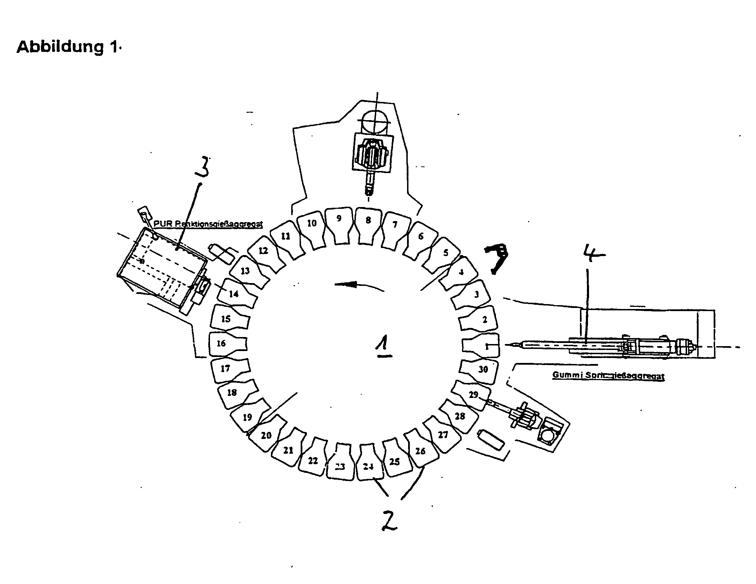

In der Figur 1 ist eine Fertigungsanlage für Schuhe dargestellt, in der an einem sogenannten Rundtisch 1 im vorliegenden Beispiel 30 Formstationen 2 angeordnet sind, die weiter unten im einzelnen erklärt werden.

An dem Rundtisch 1 sind in definiertem Abstand zueinander einerseits ein Polyurethan-Reaktionsgießaggregat 3 und andererseits ein Gummispritzgießaggregat 4 angeordent. Die Formstationen 2 bewegen sich karussellartig taktweise in die Wirkungsbereiche der Aggregate 3 und 4, wobei mittels des Gummispritzgießaggregats 4 eine Gummilaufsohle im Formwerkzeug 2 erzeugt wird, in dem dann, nachdem das Formwerkzeug 2 in den Bereich des Polyurethan-Reaktionsgießaggregats 3 gelangt ist, die Polyurethan-Zwischensohle auf der Gummilaufsohle erzeugt wird und gleichzeitig diese zweischichtige Sohle mit einem auf einem Leisten gezogenen Schaft verbunden wird. Alternativ können mit Hilfe dieser Anlage auch lediglich die zweischichtigen Sohlen erzeugt werden.

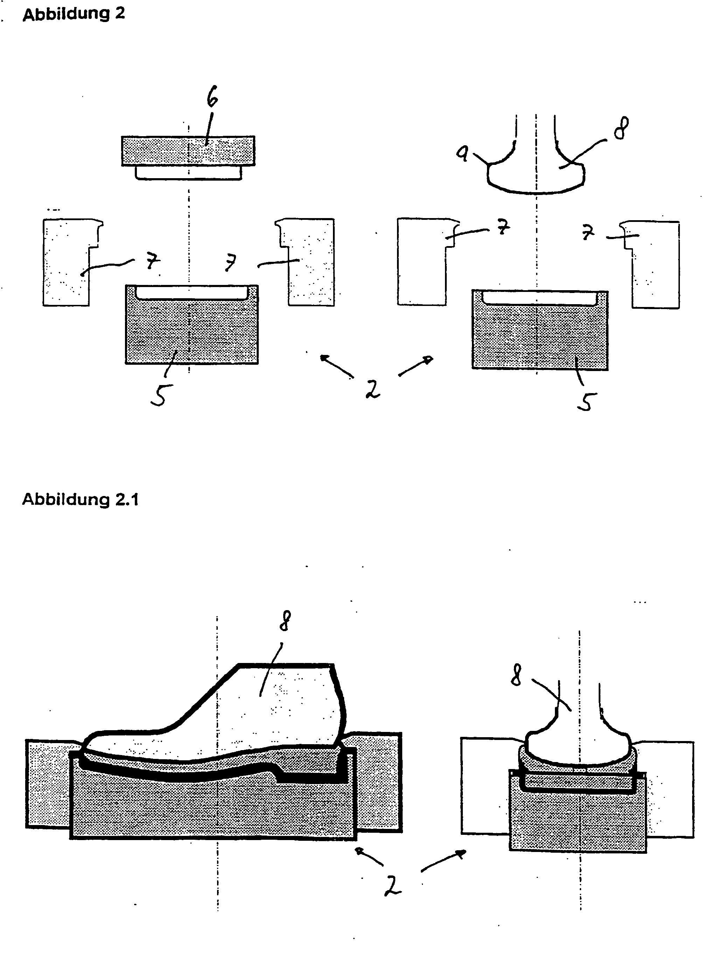

In der Abbildung 2 ist schematisch ein Formwerkzeug 2 dargestellt, welches aus einem vertikal verfahrbaren Bodenstempel 5, einem Verdränger 6 und im vorliegenden Fall zwei Formenrahmenteilen 7 besteht. Der Verdränger 6 wird, wenn die zu erzeugende Sohle an den Schaft angespritzt werden soll, durch einen Leisten 8 ersetzt, auf den der Schaft 9 aufgezogen ist.

In der Abbildung 2.1 ist links das mit dem Leisten 8 oben geschlossene Formwerkzeug 2 in Seitenansicht und rechts in Vorderansicht dargestellt.

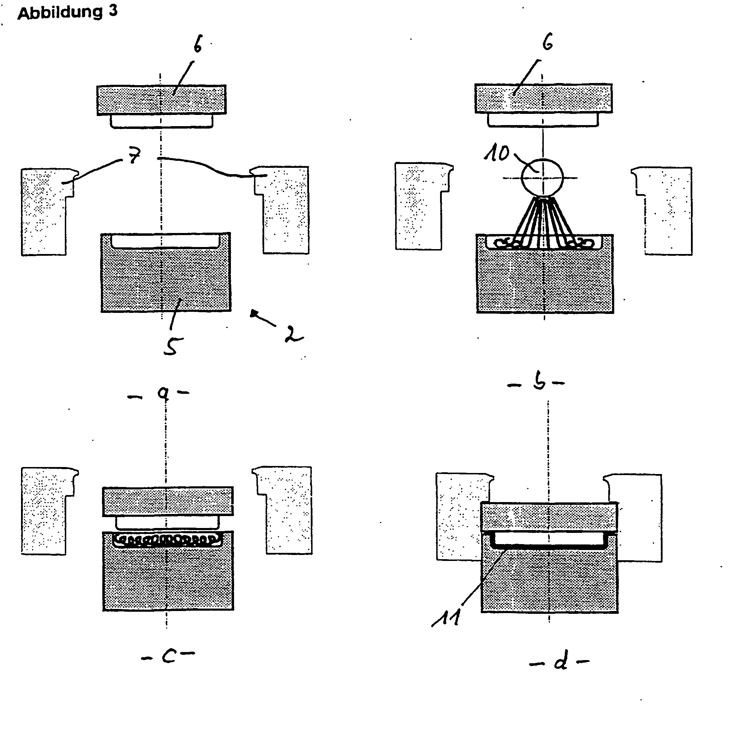

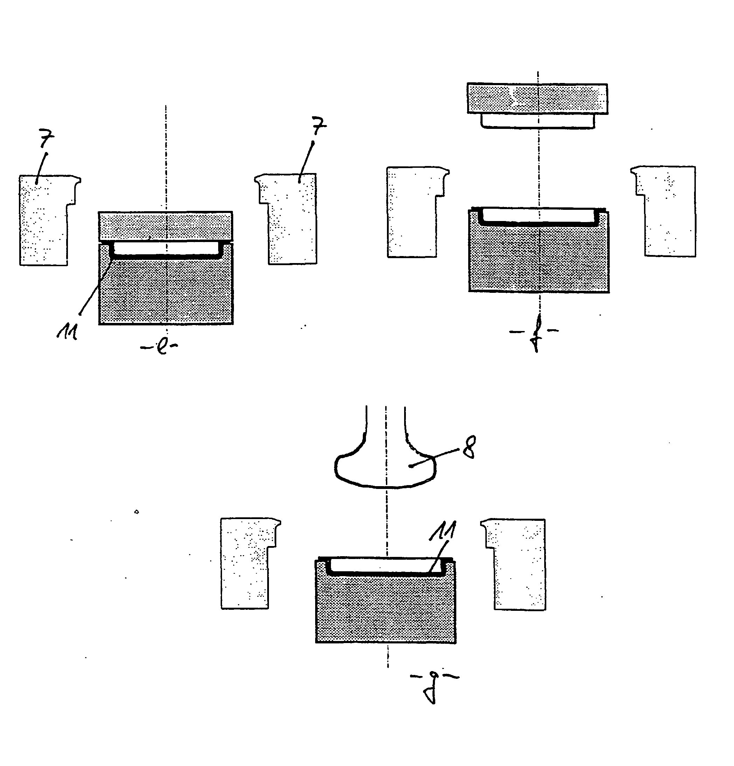

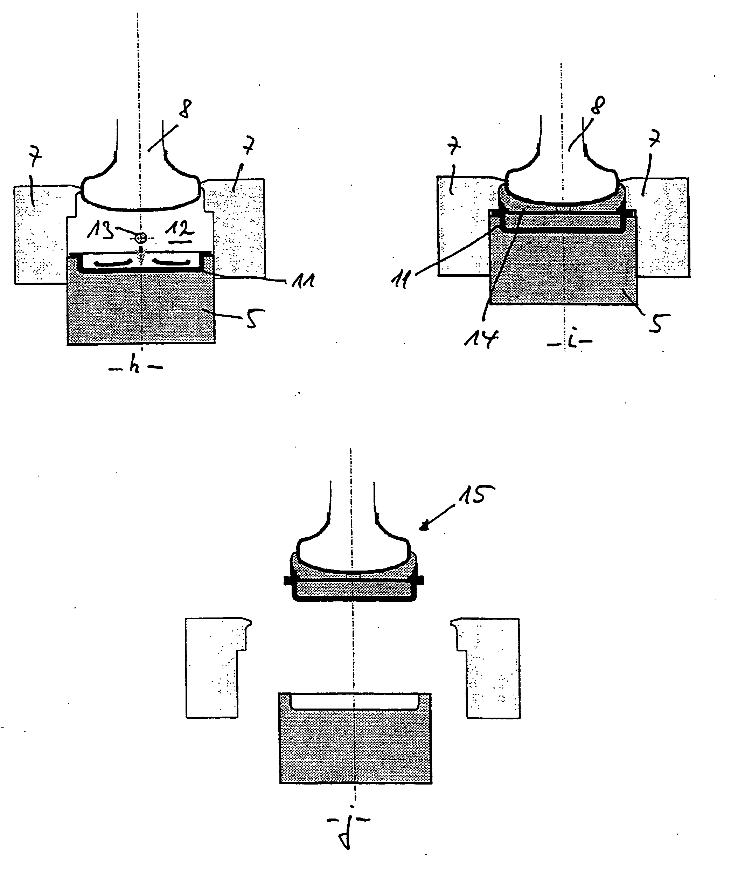

Die Abbildung 3 zeigt in den Figuren a bis j den Verfahrensablauf zur Herstellung der Laufsohle, der Zwischensohle und des fertigen Schuhs.

In der Abbildung 3 a ist das in der Abbildung 2 dargestellte Formwerkzeug 2 in seiner geöffneten Stellung dargestellt. In der Figur 3 b ist in das geöffnete Formwerkzeug der Düsenkopf 10 des Gummispritzgießaggregats 4 eingefahren. Die plastifizierte Gummimasse wird in das Formnest von oben spaghettiförmig ausgebildet eingebracht. Hierbei kommt das DESflow-Verfahren zum Einsatz.

In Abbildung 3 c ist der Verdränger 6 auf das mit plastifizierter Gummimasse gefüllte Formnest zugefahren. In Abbildung 3 d ist der Zustand dargestellt, wenn durch den Verdränger 6 das plastifizierte Gummimaterial im Formnest verpresst worden ist und sich die Formenrahmenteile 7 geschlossen haben.

In der Figur 3 e sind die Formrahmenteile 7 wieder entfernt, während der Verdränger 6 die Formkavität noch verschließt. In dieser Position wird die in Figur 3 d dargestellte Vorvulkanisation der Sohle 11 fortgeführt.

In der Figur 3 f ist auch der Verdränger 6 entfernt worden. In der Figur 3 g ist der Verdränger 6 durch den Leisten 8 ersetzt worden.

In der Figur 3 h ist aus Bodenstempel 5 mit der noch darin befindlichen, noch nicht ausvulkanisierten Gummisohle 11, den Formenrahmenteilen 7 und dem Leisten 8 ein Formhohlraum 12 gebildet, in den die Einspritzdüse 13 des Polyurethan-Reaktionsgießaggregats 3 eingefahren ist, welches das aus Polyol und Isozyanat bestehende Polyurethan in flüssiger Form in diesen Hohlraum eingießt.

In der Figur 3 i sind Leisten 8 und Formenrahmenteile 7 relativ zum Bodenstempel 5 verfahren, so dass sich der Formhohlraum 12 auf die gewünschte Zwischensohlendicke verkleinert hat.

Die Zwischensohle ist mit dem Bezugszeichen 14 versehen. Die Gummilaufsohle 11 schließt die Zwischensohle 14 dabei teilweise ein.

Die Figur 3 j zeigt den Zustand, in dem das Formwerkzeug 2 geöffnet ist, um den Leisten 8 mit dem fertigen Schuh 15 entnehmen zu können.

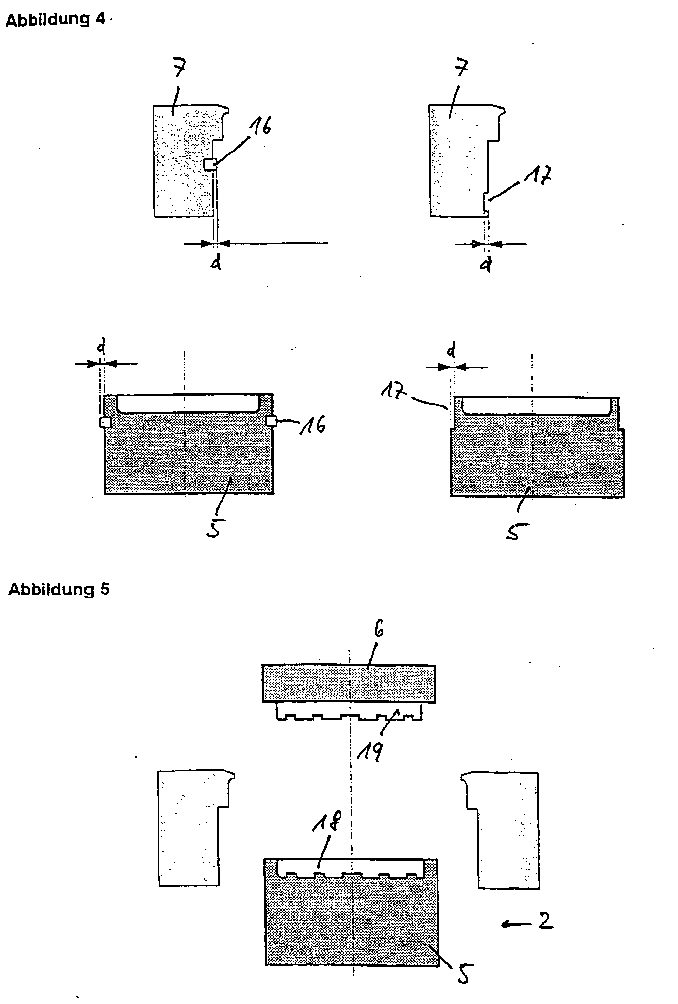

In der Abbildung 4 sind einerseits Formenrahmenteile 7 dargestellt, und andererseits Bodenstempel 5, bei denen zur Minderung der Temperaturübertragung zwischen Bodenstempel 5 und Rahmen 7 alternativ Distanzstücke 16 oder abgesetzte Formflächen 17 vorgesehen sind, die in einer Größenordnung von d= 0,1 bis 0,2 bzw. 0,5 mm liegen.

Derartige Distanzstücke, bzw. Distanzstreifen oder Abstandhalter können auch im Verdränger 6 vorgesehen sein.

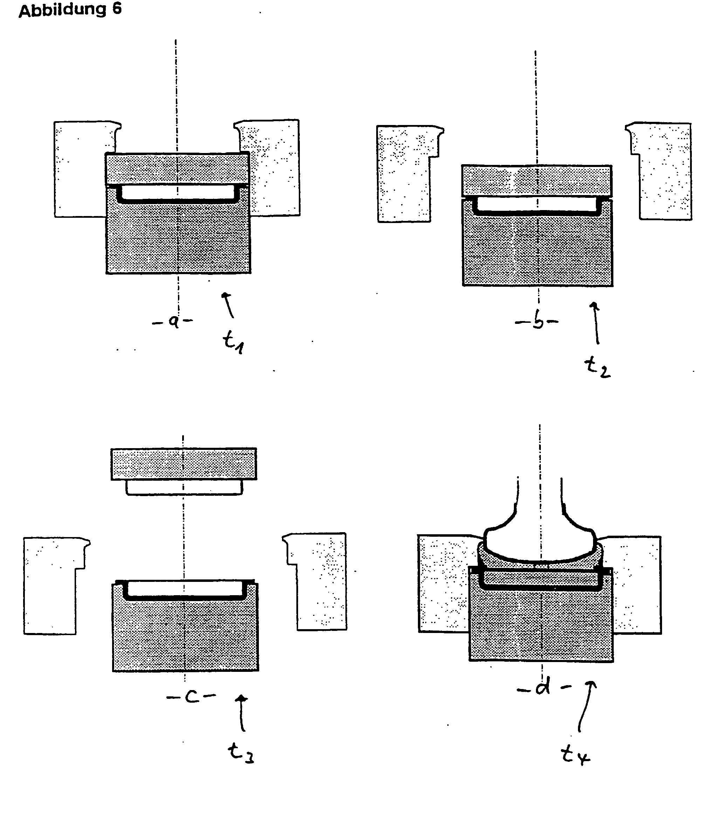

In der Abbildung 5 ist ein Formwerkzeug 2 dargestellt, bei dem der Bodenstempel 5 ein Formnest mit einer Stollengravur 18 für eine Gummilaufsohle aufweist, während der Verdränger 6 mit einer entsprechenden Gegengravur 19 als obere Werkzeugplatte versehen ist. Hierdurch wird eine nahezu gleichmäßige Artikelstärke über den gesamten Konturverlauf der hergestellten Laufsohle bewirkt. Mit der gleichmäßigen Artikelstärke wird eine gleichmäßige Temperaturführung und eine gleichmäßige Vulkanisation erreicht. Vorzugszweise ist eine Sohlenstärke von 1,5 mm zu wählen, um die Temperaturkontrolle positiv zu beeinflussen. Die Dicke sollte auf jeden Fall zwischen 1 und 2,5 mm liegen.

Schließlich sind in den Abbildungen 6a bis d die für das Verfahren wesentlichen Vulkanisationsphasen t1 bis t4 dargestellt.

In der Phase t1 findet die Vorvulkanisation im komplett geschlossenen Formwerkzeug 2 statt. Diese Phase dient der Geometriebildung.

In der Phase t2 findet die Teilvulkanisation mit geöffnete

In der Phase t3 wird die Oberfläche der gefertigten Sohle mit geöffentem Formwerkzeug 2 abgekühlt. Diese Phase dient auch dem Entgasen der Gummisohle. Der Artikel, z.B. die Schuhsohle 11, bleibt in der Unterplatte (Bodenstempel 5) des Formwerkzeugs 2 liegen.

In der Phase t4 findet die Nachvulkanisation der Gummisohle und Polyurethan-Bindung statt. Das Formwerkzeug 2 ist komplett geschlossen. Das Polyurethan-Material reagiert auf der Gummifläche der Laufsohle aus. Die Wärmeabgabe der exotermen Polyurethan-Reaktion und die Temperatur der Werkzeugunterplatte (Bodenstempel 5) bewirken das Ausvulkanisieren der Gummisohle.

In den Phasen t2 und t3 wird der prozentuale Vulkanisationsgrad bestimmt. Es wurde festgestellt, dass mit einer gesteuerten Untervulkanisation die Haftung zum Polyurethan positiv beeinflusst wird.

## Patentansprüche

1. Verfahren zur Herstellung von Sohlen bei der maschinellen Schuhherstellung, wobei die Sohle aus mindestens einer Laufsohlenschicht und einer Zwischensohlenschicht aufgebaut ist, und die eine Schicht aus Gummi und die andere aus Polyurethan besteht, beide Schichten in derselben aus einem Bodenstempel (5), einem mindestens zweiteiligen Formenrahmen (7) und einem Verdränger (6) bzw. Leisten (8) estehenden Formwerkzeug hergestellt werden, wobei zunächst die Gummisohlenschicht geformt, auf diese Schicht das Polyurethan gegossen und zur Bildung der Zwischensohlenschicht ausreagieren gelassen wird,
wobei
zur Herstellung der Gummisohle zunächst der Bodenstempel (5) und die Formenrahmenteile zu einer oben offenen Formkavität zusammengefahren werden, in diese Formkavität die plastische Gummimasse mit einer Temperatur knapp unterhalb der Vulkanisationstemperatur eingefüllt wird, welche nach Aufsetzen eines Verdrängers (6) im somit komplett geschlossenen Formwerkzeug in einer ersten Phase (t1) verpresst und vorvulkanisiert wird, danach in einer zweiten Phase (t2) bei geöffneten Formenrahmen (7) eine Teilvulkanisation stattfindet, danach der Verdränger (6) entfernt wird und die Oberfläche der Gummischicht eine Abkühlphase und Entgasungsphase (t3) durchläuft, wobei in den Phasen (t2) und (t3) eine gesteuerte Untervulkanisation stattfindet, sodann der Verdränger (6) durch einen Leisten (8) bzw. weiteren Verdränger ersetzt wird, derart, daß zwischen Leisten/Verdränger und der freien Oberfläche der Gummisohle ein Formraum für die zu formende Zwischensohle (14) verbleibt, in diesen Zwischenraum die Polyurethan-Masse eingegossen wird, nachdem auch der Formenrahmen geschlossen worden ist und die Polyurethan-Masse innerhalb der geschlossenen Form auf der Gummisohlenschicht unter Ableitung überflüssiger Reaktionswärme nach aussen ausreagiert, wobei durch die verbleibende Reaktionswärme die Nachvulkanisation (Phase (t4)) der Gummisohlenschicht erfolgt sowie die innige Verbindung zwischen Gummi- und Polyurethan-Schicht.

2. Verfahren nach Anspruch 1
**dadurch gekennzeichnet,**
**daß** die Verbindungsoberfläche der Gummisohlenschicht durch Einprägungen vergrößert wird, die den Konturen des Laufprofils der Gummisohle entsprechen, so daß die Gummisohlenschicht überall eine nahezu gleichmäßige Sohlenwandstärke erhält.

3. Verfahren nach Anspruch 1 oder 2,
**dadurch gekennzeichnet,**
**daß** der Verdränger (6) in einem Temperaturbereich zwischen 140° C und 220° C erwärmt wird, der Bodenstempel (5) in einem Temperaturbereich zwischen 90° C und 150° C und der Formenrahmen (7) in einem Temperaturbereich zwischen 40° C und 80° C temperiert wird.

4. Verfahren nach einem der Ansprüche 1 bis 3,
**dadurch gekennzeichnet,**
**daß** die noch nicht ausvulkanisierte Gummioberfläche im Anschluß an Phase (t3) thermisch aktiviert wird.

5. Verfahren nach Anspruch 4,
**dadurch gekennzeichnet,**
**daß** zur thermischen Aktivierung ein Heizstrahler verwendet wird.

6. Verfahren nach Anspruch 4,
**dadurch gekennzeichnet,**
**daß** die thermische Aktivierung auch einer Entgasung der Gummisohle dient.

7. Verfahren nach einem der Ansprüche 1 bis 6,
**dadurch gekennzeichnet,**
**daß** zur Verminderung einer Temperaturübertragung zwischen Bodenstempel (5) und Formenrahmen (7) im Rahmen und/oder im Bodenstempel Distanzstücke verwendet werden.

8. Verfahren nach einem der Ansprüche 1 bis 6,
**dadurch gekennzeichnet,**
**daß** zur Verminderung der Temperaturübertragung zwischen Bodenstempel (5) und Formenrahmen (7) im Rahmen und/oder oder im Bodenstempel abgesetzte Formenflächen verwendet werden.

## Claims

1. Process for fabricating soles in the case of mechanised shoe manufacture, wherein the sole is assembled from at least one outer sole layer and one intermediate sole layer, and the one layer consists of rubber and the other of polyurethane, both layers are fabricated in the same moulding tool comprising a die (5), a moulding frame (7) having at least two parts and a displacement part (6) or a last (8), wherein first the rubber sole is formed, the polyurethane is poured onto this layer and is allowed to react to form the intermediate sole layer, and wherein to fabricate the rubber sole first the die (5) and the moulding frame parts are rammed together into an upwards opening moulding cavity, the plasticized rubber mass is poured into this cavity at a temperature just below the vulcanisation temperature, which after ramming by displacement part (6) into the moulding tool completely closed in this way, is pressed and pre-vulcanised in an initial phase (t1), and subsequently in a second phase (t2) partial vulcanisation takes place with the moulding frame opened, then after the displacement part (6) is withdrawn and the surfaces of the rubber layer undergoes a cooling off and de-gassing phase (t3), whereby a controlled under curing takes place in phases (t2) and (t3), then the displacement part (6) is replaced by a last (8) or additional displacement part, such that a moulding space for the intermediate sole to be moulded is left behind between the last/displacement part and the free surface of the rubber sole, the polyurethane mass is poured into this intermediate space, after which the moulding frame has also become closed and the polyurethane mass inside the closed mould reacts finally upon the rubber sole layer under the discharge of surplus reaction heat to the outside, and wherein the post vulcanisation of the rubber sole layer (phase (t4)), is effected by the remaining reaction heat along with the intimate bonding between rubber and polyurethane layer.

2. Process according to claim 1 **characterised** wherein the bonding surface of the rubber sole layer is enlarged by the stampings, which correspond to the contours of the outer profile of the rubber soles, so that the rubber sole layer obtains a near uniform sole wall thickness at all points.

3. Process according to claims 1 or 2, **characterised** wherein the displacement part (6) is heated in a temperature range between 140 °C and 220°C, the die in a temperature range between 90°C and 150°C and the moulding frame in a temperature range between 40°C and 80 °C.

4. Process according to one of claims 1 to 3, **characterised** wherein the as yet not completely vulcanised rubber sole surface is thermally activated following phase (t3).

5. Process according to claim 4, **characterised** wherein a radiant heater is employed for the thermal activation.

6. Process according to claim 4, **characterised** wherein the thermal activation also serves to de-gas the rubber sole.

7. Process according to claims 1 to 6, **characterised** wherein spacers are employed in the frame and / or in the die to minimise the temperature transmission between die (5) and moulding frame (7).

8. Process according to claims 1 to 6, **characterised** wherein offset mould surfaces are employed in the frame and / or in the die to minimise the temperature transmission between die (5) and moulding frame (7)

## Revendications

1. Procédé de fabrication de semelles dans la fabrication de chaussures à la machine, la semelle étant constituée d'au moins une couche de semelle d'usure et une couche de semelle intermédiaire, et une couche étant composée de caoutchouc et l'autre de polyuréthane, les deux couches étant fabriquées dans le même outil de formage composé d'un moule de semelle d'usure (5), d'une carcasse de moule (7) en au moins deux parties et d'un élément de refoulement (6) ou d'un embauchoir (8), sachant que l'on forme tout d'abord la couche de semelle en caoutchouc, on coule le polyuréthane sur cette couche et on le laisse réagir entièrement pour la formation de la couche de semelle intermédiaire,
pour la fabrication de la semelle en caoutchouc, le moule de semelle (5) et les parties de la carcasse de moule étant tout d'abord assemblés en une cavité de moulage ouverte vers le haut, dans cette cavité de moulage la masse de caoutchouc plastique est versée à une température juste en dessous de la température de vulcanisation, laquelle masse est pressée et prévulcanisée dans une première phase (t1), après la pose d'un élément de refoulement (6), dans le moule de formage ainsi complètement fermé, ensuite, dans une seconde phase (t2), lorsque la carcasse de moule (7) est ouverte, il se produit une vulcanisation partielle, ensuite l'élément de refoulement (6) est enlevé et la surface de la couche de caoutchouc passe par une phase de refroidissement et une phase de dégazage (t3), dans les phases (t2) et (t3) ayant lieu une sous-vulcanisation contrôlée, puis l'élément de refoulement (6) étant remplacé par un embauchoir (8) ou un autre élément de refoulement de telle sorte qu'entre l'embauchoir/l'élément de refoulement et la surface libre de la semelle en caoutchouc, il demeure un espace de moulage pour la semelle intermédiaire (14) à former, la masse de polyuréthane est coulée dans cet espace, après que la carcasse de moule ait également été fermée, et on laisse réagir entièrement la masse de polyuréthane à l'intérieur du moule fermé sur la couche de semelle en caoutchouc avec évacuation de la chaleur de réaction en excès vers l'extérieur, la vulcanisation postérieure (phase (t4)) de la couche de semelle en caoutchouc ainsi que la liaison étroite entre la couche de caoutchouc et la couche de polyuréthane se produisant au moyen de la chaleur de réaction restante.

2. Procédé selon la revendication 1, **caractérisé en ce que** la surface de liaison de la couche de semelle en caoutchouc est agrandie par des gravures qui correspondent aux contours du profil externe de la semelle en caoutchouc de telle sorte que la couche de semelle en caoutchouc obtient une épaisseur de semelle presque homogène de partout.

3. Procédé selon la revendication 1 ou 2, **caractérisé en ce que** l'élément de refoulement (6) est réchauffé dans une plage de température située entre 140°C et 220°C, le moule de semelle d'usure (5) est tempéré dans une plage de température située entre 90°C et 150°C et la carcasse de moule (7) est tempérée dans une plage de température située entre 40°C et 80°C.

4. Procédé selon l'une quelconque des revendications 1 à 3, **caractérisé en ce que** la surface en caoutchouc, pas encore entièrement vulcanisée, est thermiquement activée consécutivement à la phase (t3).

5. Procédé selon la revendication 4, **caractérisé en ce que** l'on utilise un radiateur chauffant pour l'activation thermique.

6. Procédé selon la revendication 4, **caractérisé en ce que** l'activation thermique sert également au dégazage de la semelle en caoutchouc.

7. Procédé selon l'une quelconque des revendications 1 à 6, **caractérisé en ce que**, pour réduire une transmission de température entre le moule de semelle (5) et la carcasse de moule (7), on utilise des séparateurs dans la carcasse et/ou dans le moule de semelle.

8. Procédé selon l'une quelconque des revendications 1 à 6, **caractérisé en ce que** pour réduire la transmission de température entre le moule de semelle (5) et la carcasse de moule (7), on utilise des surfaces de moulage décalées dans la carcasse et/ou dans le moule de semelle.
